**Europäisches Patentamt**

**European Patent Office**

**Office européen des brevets**

(11) Veröffentlichungsnummer: **0 335 141**
**A2**

# (12) EUROPÄISCHE PATENTANMELDUNG

(21) Anmeldenummer: **89104090.9**

(22) Anmeldetag: **08.03.89**

(51) Int. Cl.⁴: **H04B 1/16**

(30) Priorität: **26.03.88 DE 3810479**

(43) Veröffentlichungstag der Anmeldung:
**04.10.89 Patentblatt 89/40**

(84) Benannte Vertragsstaaten:
**AT CH DE ES FR GB IT LI SE**

(71) Anmelder: **Blaupunkt-Werke GmbH**
**Robert-Bosch-Strasse 200**
**D-3200 Hildesheim(DE)**

(72) Erfinder: **Brunke, Heiner**
**Adolf-Kolping-Strasse 38**
**D-3200 Hildesheim(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) Autoradio mit einer Schaltungsanordnung zur Feststellung empfangsortbedingter Störungen.

(57) Bei einem Autoradio werden diverse empfangsbedingte Störungen von im Gerät vorgesehenen Erkennungsschaltungen (7, 8, 9) erkannt, in Steuersignale umgewandelt und bei Bedarf mittels einer von einer Steuerschaltung (10, 10') angesteuerten Anzeigevorrichtung (11, 11') optisch angezeigt.

Fig. 1

EP 0 335 141 A2

## Autoradio mit einer Schaltungsanordnung zur Feststellung empfangsortbedingter Störungen

Die Erfindung betrifft ein Autoradio mit einer Schaltungsanordnung zur Feststellung empfangsortbedingter Störungen.

Bei mobilem Betrieb eines Autoradios können insbesondere beim Empfang von FM-Sendern Störgeräusche und/oder Verzerrungen auftreten. Diese werden beispielsweise durch Schwankungen der Empfangsfeldstärke, Mehrwegeempfang, in Sendernähe auftretende Großsignale usw., hervorgerufen.

Da der Betreiber eines Autoradios in der Regel nicht unterscheiden kann, ob es sich hierbei um empfangsortbedingte Störungen oder um aufgrund eines Gerätefehlers auftretende Störungen handelt, werden Autoradios häufig subjektiv reklamiert. Zur Klärung der Beanstandungen muß das Autoradio ausgebaut, in einer Werkstatt untersucht, ggf. repariert und schließlich wieder eingebaut werden. Dieses ist bei überwiegend unbegründeten Beanstandungen nicht nur aufwendig, sondern verursacht zudem nicht unerhebliche Kosten.

Der Erfindung liegt die Aufgabe zugrunde, ein Autoradio zu schaffen, bei dem das Vorhandensein von diversen, die Empfangsqualität beeinflussenden Störgrößen optisch angezeigt werden kann.

Diese Aufgabe wird bei einem gattungsgemäßen Autoradio durch die kennzeichnenden Merkmale des Anspruchs 1 gelöst.

Die mit der Erfindung erzielten Vorteile bestehen insbesondere darin, daß bei einem Auftreten von Störgeräuschen und/oder Verzerrungen während eines mobilen Betriebes des Autoradios der Benutzer unmittelbar ablesen kann, ob den Empfang derzeit beeinflussende empfangsortbedingte Störgrößen vorhanden sind. Hierdurch wird ein unnötiges kostenverursachendes Aus- und Einbauen sowie Untersuchen des Autoradios auf mögliche Fehler weitgehend vermieden.

Durch die in den Unteransprüchen aufgeführten Maßnahmen sind vorteilhafte Ausgestaltungen des im Anspruch 1 angegebenen Autoradios möglich. Mit einem sehr geringen Aufwand läßt sich eine Ausgestaltung nach den Ansprüchen 3 oder 4 erzielen. Hierbei ist für die Anzeige aller vorgesehenen Störgrößen nur ein Anzeigeelement erforderlich. Bei einer besonders vorteilhaften Ausgestaltung nach Anspruch 5 wird die Art der den Empfang beeinträchtigenden Störung direkt angezeigt. Dieses läßt sich nach Anspruch 7 in vorteilhafter Weise durch die zusätzliche Nutzung einer für die Abstimmanzeige vorgesehenen optischen Anzeigevorrichtung erreichen.

Ausführungsbeispiele der Erfindung sind in der Zeichnung dargestellt und werden im folgenden näher erläutert.

Es zeigen

Figur 1 ein Blockschaltbild eines Autoradios mit Erkennungsschaltungen für Störgrößen, einer ersten Steuerschaltung und einer ersten optischen Anzeigevorrichtung und

Figur 2 eine weitere Steuerschaltung in Verbindung mit einer weiteren Anzeigevorrichtung.

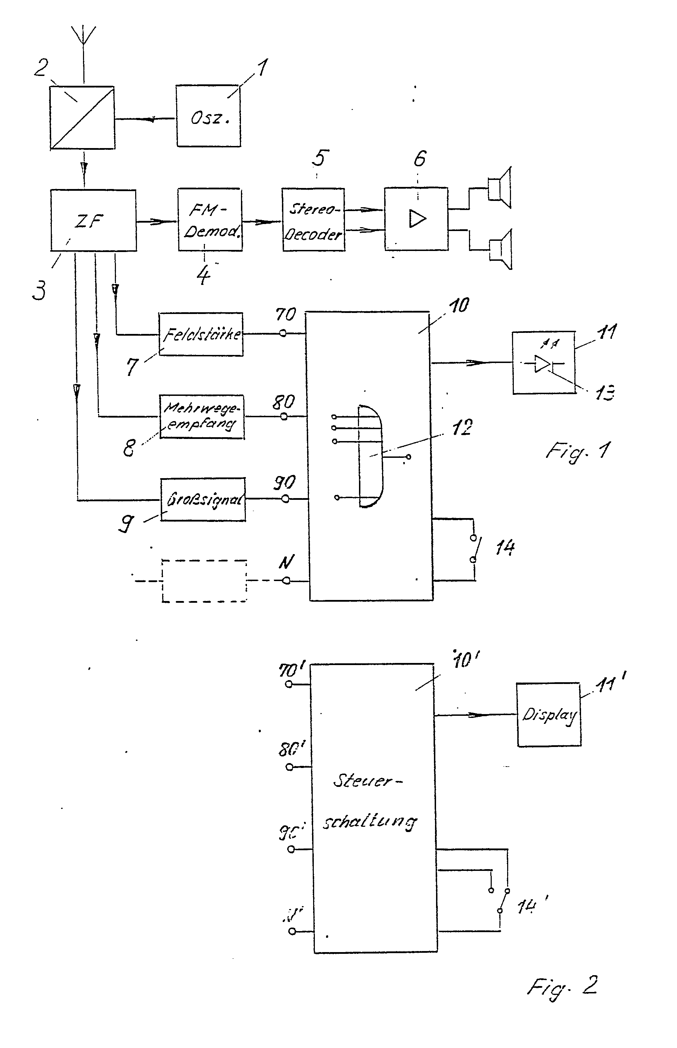

Der an sich bekannte Empfangsteil eines Autoradios nach Figur 1 weist einen Empfangsoszillator 1, eine Mischstufe 2, einen ZF-Verstärker 3, einen FM-Demodulator 4, einen Stereodemodulator 5 und einen NF-Verstärker 6 auf. Dem ZF-Verstärker 3 zusätzlich entnommene Signale werden jeweils an sich bekannten Erkennungsschaltungen für Feldstärkeschwankungen 7, Mehrwegeempfang 8 und Antennengroßsignal 9 zugeführt.

Die Ausgangssignale der Schwellwertstufen aufweisenden Erkennungsschaltungen 7, 8, 9 werden den Eingangsklemmen 70, 80, 90 einer Steuerschaltung 10, die zur Ansteuerung einer optischen Anzeigevorrichtung 11 vorgesehen ist, zugeführt. Beim Ausführungsbeispiel nach Figur 1 wird die Steuerschaltung 10 aus einer ODER-Schaltung 12 und die Anzeigevorrichtung 11 aus einer als Lichtquelle dienenden Leuchtdiode 13 gebildet. Die Steuerschaltung 10 ist mittels eines Betätigungselementes 14 aktivierbar.

Bei einem weiteren Ausführungsbeispiel nach Figur 2 werden die Ausgangssignale der Erkennungsschaltungen 7, 8, 9 den Eingangsklemmen 70', 80', 90' einer Steuerschaltung 10', die eine Anzeigevorrichtung 11' ansteuert, zugeführt. Bei der Anzeigevorrichtung 11' handelt es sich hierbei um eine Flüssigkristallanzeigevorrichtung, die als Abstimmanzeige für das Autoradio dient. Die Umschaltung der Anzeige erfolgt mittels eines Betätigungselementes 14'.

Nimmt der Betreiber eines derartigen Autoradios während des mobilen Betriebes Störgeräusche wahr, so hat er die Möglichkeit, unmittelbar zu überprüfen, ob es sich hierbei um empfangsortbedingte Störungen handelt oder um Störungen, die auf Fehler im Gerät zurückzuführen sind. Er muß hierzu mittels des vorgesehenen Betätigungselementes 14, 14' die Steuerschaltung 10, 10' für die Anzeigevorrichtung 11, 11' aktivieren. Das Betätigungselement 14, 14' kann auch derart ausgelegt sein, daß es nur vom Kundendienst bzw. von einem Fachmann bedienbar ist. Erreicht eine der Störgrößen einen vorgegebenen Pegel, so wird entweder über das ODER-Glied 12 die Leuchtdiode 13 zum Leuchten gebracht oder die Art der Störgröße mittels der Flüssigkristall-Anzeigevorrichtung 11' direkt angezeigt. Die Steuerschaltung 10' ist derart auszulegen, daß beim gleichzeitigen Auftreten mehrerer Störgrößen die Anzeigen alternierend erfolgen. Es können selbstverständlich noch weitere Störgrößen ermittelt und ausgewertet werden, wobei bereits im Autoradio vorhandene Erkennungsschaltungen mitbenutzt werden können.

## Ansprüche

1. Autoradio mit einer Schaltungsanordnung zur Feststellung empfangsortbedingter Störungen,
dadurch gekennzeichnet,
daß die Ausgänge von mehreren, im Autoradio vorgesehenen Erkennungsschaltungen (7, 8, 9) zum Erkennen von die Empfangsqualität beeinflussenden Störgrößen mit den Eingängen (70, 80, 90; 70', 80', 90') einer Steuerschaltung (10, 10') verbunden sind, mit der eine ihr nachgeschaltete optische Anzeigevorrichtung (11, 11') ansteuerbar ist.

2. Autoradio nach Anspruch 1,
dadurch gekennzeichnet,
daß den Eingängen (70, 80, 90; 70', 80', 90') der Steuerschaltung (10, 10') aus empfangsortbedingten Störungen, wie Feldstärkeschwankungen, Mehrwegeempfang, Großsignal und dergleichen abgeleitete Steuersignale zugeführt werden.

3. Autoradio nach Anspruch 1 oder Anspruch 2,
dadurch gekennzeichnet,
daß als Steuerschaltung (10) eine ODER-Schaltung (12) vorgesehen ist.

4. Autoradio nach Anspruch 3,
dadurch gekennzeichnet,
daß als optische Anzeigevorrichtung eine Leuchtdiode (13) vorgesehen ist.

5. Autoradio nach Anspruch 1 oder 2,
dadurch gekennzeichnet,
daß als Steuerschaltung (10') die Ansteuerschaltung für eine ihr nachgeschaltete Flüssigkristallanzeigevorrichtung (11') vorgesehen ist, welche die Art der den Empfang beeinträchtigenden Störungen anzeigt.

6. Autoradio nach einem der Ansprüche 1 bis 5,
dadurch gekennzeichnet,
daß die optische Anzeige bei Bedarf mittels eines Betätigungselementes (14, 14') einschaltbar ist.

7. Autoradio nach einem der Ansprüche 1, 5 oder 6,
dadurch gekennzeichnet,
daß als optische Anzeigevorrichtung (11') eine für die Abstimmanzeige des Autoradios vorgesehene Anzeigevorrichtung zusätzlich genutzt wird.

Fig. 1

Fig. 2